# EUROPÄISCHE PATENTSCHRIFT

(11) **EP 4 496 826 B1**
(45) Veröffentlichungstag und Bekanntmachung des Hinweises auf die Patenterteilung: **06.05.2026**
(21) Anmeldenummer: 23709940.3
(22) Anmeldetag: 02.03.2023
(51) Int. Cl.: C08G 59/68, C08G 59/24, C08G 59/32, C08G 59/40, C08G 65/26, C08F 283/10

(54) **NIEDERTEMPERATURHÄRTENDE MASSEN AUF BASIS VON GLYCIDYLETHERN**
LOW-TEMPERATURE-CURING COMPOUNDS BASED ON GLYCIDYL ETHERS
COMPOSÉS DE DURCISSEMENT À BASSE TEMPÉRATURE À BASE D'ÉTHERS DE GLYCIDYLE

(30) Priorität: 22.03.2022 DE 102022106647
(43) Veröffentlichungstag der Anmeldung: 29.01.2025
(73) Patentinhaber: DELO Industrie Klebstoffe GmbH & Co. KGaA, 86949 Windach (DE)
(72) Erfinder: PHILIPPI, Andreas, 86949 Windach (DE); STUMBECK, Michael, 86949 Windach (DE)
(74) Vertreter: Prinz & Partner mbB
(86) Internationale Anmeldenummer: PCT/EP2023/055308
(87) Internationale Veröffentlichungsnummer: WO 2023/180035

(56) Entgegenhaltungen:
- US-A- 5 374 697
- US-A1- 2020 190 251

## Beschreibung

### GEBIET DER ERFINDUNG

Die vorliegende Erfindung betrifft eine niedertemperaturhärtende Masse auf Basis mindestens eines Glycidylethers und einer thermisch latenten Säure.

Darüber hinaus betrifft die Erfindung die Verwendung der Masse als Dicht-, Klebe- und/oder Vergussmasse sowie zum Beschichten von Substraten.

### TECHNISCHER HINTERGRUND

Initiatoren für die kationisch induzierte Warmhärtung von Epoxiden sind beispielsweise aus der US 8 686 108 B2 bekannt. Es kommen Aluminiumchelatverbindungen zum Einsatz, die zusammen mit einem Arylsilan durch Grenzflächenpolymerisation mit einem Isocyanat verkapselt wurden. Die so erhaltenen Initiatoren verfügen durch ihre Verkapselung über eine hohe Latenz bei Raumtemperatur. Durch Erwärmen kommt es zu einem Aufschmelzen der Verkapselung und einer Freisetzung der Alumimiumchelatverbindung, die wiederum in einer härtbaren Masse die kationische Polymerisation initiieren kann. Die Initiatoren aus der Offenbarung weisen dabei enge Partikelgrößenverteilungen im Bereich weniger µm auf.

Weitere wärmelatente Initiatoren zur kationischen Polymerisation auf Basis von quartären Benzylammoniumsalzen werden in der US 5 070 161 A oder der WO 2005/097883 beschrieben. Kommerziell verfügbare Produkte sind unter den Bezeichnungen K-PURE CXC-1614 oder K-PURE CXC-1733 von King Industries Inc. erhältlich. In härtbaren Formulierungen kommen diese stets gelöst zum Einsatz.

Wärmelatente Initiatoren zur kationischen Polymerisation auf Basis von aromatischen Sulfoniumsalzen werden in der JP H 0 372 569 A, der JP 60 700 05 B2 oder auf https://www.tcichemicals.com/DE/de/c/13102 beschrieben.

Aus der JP 2013 100 237 A ist ein Verfahren zur Herstellung einer Sulfoniumverbindung bekannt, die als thermischer Initiator in der kationischen Polymerisation eingesetzt werden kann. Beispielhaft wird in der Schrift ein aromatisches Sulfonium-Hexafluoroantimonatsalz zur Polymerisation eines auf Bisphenol A basierenden Diglycidylethers eingesetzt. Dazu wird der Initiator zuvor in einem Lösungsmittel gelöst und verdünnt. Komplexere Formulierungen werden nicht beschrieben.

Die JP 2006 282 633 A offenbart weitere Sulfoniumverbindungen, die als thermische Initiatoren in der kationischen Polymerisation eingesetzt werden können. Die Offenbarung empfiehlt explizit, den Initiator in einem nicht reaktiven Lösungsmittel, bevorzugt auf Basis von Estern oder Lactonen, zu lösen.

Kationisch polymerisierbare Massen mit Photoinitiatoren auf Basis von Sulfonium- und lodoniumsalzen können den Publikationen von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 entnommen werden.

Als Anionen für die Sulfonium- oder lodoniumsalze können HSO₄⁻, PF₆⁻, SbF₆⁻, AsF₆⁻, Cl⁻, Br, I⁻, ClO₄⁻, PO₄⁻, SO₃CF₃⁻, Tosylat oder ein Borat-Anion, wie etwa BF₄⁻ und B(C₆F₅)₄⁻, dienen. Ebenfalls geeignet sind Aluminatanionen, wie sie in der der EP 3 184 569 A1 oder der WO 2017 035 551 A1 offenbart werden.

Kationisch härtbare Massen auf Basis der genannten Initiatoren werden unter anderem in der EP 0 066 543 A2, der WO 2019 002 360 A1, der EP 3 088 465 B1 und der US 6 455 121 B1 beschrieben. Die offenbarten Formulierungen können dabei durch Eintrag von Wärme und/oder aktinischer Strahlung gehärtet werden.

Die US 2020/0190251 A1 offenbart kationisch polymerisierbare Massen, die mindestens zwei Harze aus der Gruppe der Glycidylether, alicyclischen Epoxide und/oder Oxetane enthalten. Daneben werden als Initiator thermisch labile Sulfoniumsalze beschrieben, die eine Härtung der Massen bevorzugt bei einer Temperatur von 65 °C oder darunter ermöglichen. Zur Stabilisierung der Massen werden Sulfoniumsalze vorgeschlagen, die über ein Methylsulfatanion verfügen. Allen Beispielformulierungen wird stets gamma-Butyrolacton als Lösungsmittel hinzugefügt. Die Beispiele beschreiben Verhältnisse zwischen einem aromatischen Glycidylether und einem cycloaliphatischen Epoxid von 1:1 bis 3:1. Die Massen verfügen über Verarbeitungszeiten bei Raumtemperatur von wenigen Minuten bis maximal etwa 3 Stunden. Ferner verfügen die gehärteten Massen, bedingt durch die hohen Anteile an Harzbestandteilen auf Basis von Oxetanen und/oder cycloaliphatischen Epoxiden, über eine geringere Temperatur-Feuchte-Beständigkeit.

Aufgrund zukünftiger regulatorischer Beurteilungen, wie sie auf https://echa.europa.eu/de/registry-of-clh-intentions-until-outcome/- /dislist/details/0b0236e18544ff7e und den darin verknüpften Dokumenten beschrieben sind, werden Harzsysteme mit höherer Reaktivität auf Basis von cycloaliphatischen Epoxiden unter Einhaltung des Arbeitsschutzes nur noch mit wesentlich höherem Aufwand in der Industrie zum Einsatz kommen können.

Die wissenschaftliche Publikation "Effect of Temperature on the Cationic Photopolymerization of Epoxides" von James V. Crivello, erschienen im Jahr 2008 im Journal of Macromolecular Science, Part A Band 45, Ausgabe 8, Seite 591 - 598, beschreibt die unterschiedlichen Geschwindigkeiten der kationischen Photopolymerisation von Glycidylethern und cycloaliphatischen Epoxidharzen. Letztere zeichnen sich im Vergleich zu Glycidylethern durch signifikant höhere Polymerisationsgeschwindigkeiten aus. Glycidylether benötigen unter ansonsten analogen Bedingungen in der kationischen Polymerisation dagegen signifikant länger für vergleichbar hohe Umsätze.

### ZUSAMMENFASSUNG DER ERFINDUNG

Der Erfindung liegt die Aufgabe zugrunde, die Nachteile der aus dem im Stand der Technik bekannten Zusammensetzungen zu vermeiden und wärmeinduziert kationisch polymerisierbare Massen bereit zu stellen, die Glycidylether umfassen und bei moderat erhöhter Temperatur schnell aushärten sowie gleichzeitig eine hohe Latenz bei Raumtemperatur aufweisen.

Ferner zeichnen sich die erfindungsgemäßen Massen bevorzugt durch den reduzierten Einsatz oder den vollständigen Verzicht auf krebserzeugende cycloaliphatische Epoxidharze aus.

Die gehärteten erfindungsgemäßen Massen besitzen neben einer hohen Festigkeit auch eine hohe Beständigkeit gegenüber Temperatur- und Feuchteeinwirkung.

Diese Aufgaben werden erfindungsgemäß durch eine Masse nach Anspruch 1 gelöst.

Vorteilhafte Ausführungsformen der erfindungsgemäßen Masse sind in den Unteransprüchen angegeben, die wahlweise miteinander kombiniert werden können.

Die Massen umfassen mindestens die folgenden Komponenten:
a) eine kationisch polymerisierbare Komponente (A), welche mindestens einen Glycidylether in einem Anteil von 60 bis 100 Gew.-% umfasst, bezogen auf den Anteil der Komponente (A);
b) einen thermisch latenten Säurebildner auf Basis eines aromatischen Sulfoniumsalzes (B1), welcher in der Masse als Feststoff dispergiert ist und eine Partikelgrößenverteilung mit einem Partikeldurchmesser d95 von höchstens 125 µm aufweist; und
c) mindestens einen Stabilisator (C).

Die erfindungsgemäßen Massen sind bevorzugt bei Raumtemperatur flüssig und können durch Wärme gehärtet und wahlweise durch Bestrahlen mit aktinischer Strahlung fixiert werden. Sie liegen bevorzugt einkomponentig vor.

Ferner eignen sich die erfindungsgemäßen Massen besonders zur Verwendung als Dicht-, Klebe- und/oder Vergussmasse sowie als Beschichtung, insbesondere zur Verklebung oder zum Vergießen von elektronischen und optoelektronischen Bauteilen.

### AUSFÜHRLICHE BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn verstanden werden sollen.

"Flüssig" bedeutet im Sinne der Erfindung, dass bei 23 °C der durch Viskositätsmessung bestimmte Verlustmodul G" größer als der Speichermodul G' der betreffenden Masse ist.

Soweit der unbestimmte Artikel "ein" oder "eine" verwendet wird, ist damit auch die Pluralform "ein oder mehrere" umfasst, soweit diese nicht ausdrücklich ausgeschlossen wird.

"Mindestens difunktionell" bedeutet, dass pro Molekül zwei oder mehr Einheiten der jeweils genannten funktionellen Gruppe enthalten sind.

"Einkomponentig" oder "Einkomponentenmasse" bedeutet, dass die reaktiven Bestandteile der Masse zusammen und miteinander vermischt in einer Verpackungseinheit vorliegen.

Die Massen gelten als "verarbeitbar", wenn nach dem Vermischen aller reaktiven Komponenten der Masse der Viskositätsanstieg bei einer Lagerung bei Raumtemperatur über einen Zeitraum von 72 h weniger als 25 % beträgt. "Verarbeitungszeit" bedeutet dementsprechend die Zeit, innerhalb der nach dem Vermischen unter Lagerung bei Raumtemperatur ein Viskositätsanstieg um 25 % gemessen wird.

Alle im Folgenden aufgeführten Gewichtsanteile beziehen sich, wenn nicht anders angegeben, jeweils auf das Gesamtgewicht aller Komponenten der Masse.

### Komponente (A): Kationisch polymerisierbare Komponenten

Die kationisch polymerisierbare Komponente umfasst mindestens einen Glycidylether (A1), bevorzugt einen mindestens difunktionellen aromatischen oder aliphatischen Glycidylether.

Daneben können in der Masse weitere kationisch polymerisierbare Bestandteile enthalten sein wie Vinyl- und/oder Allylether (A2), monofunktionelle Epoxide (A3), Hybridmonomere (A4), die neben einer kationischen polymerisierbaren Gruppe weitere vernetzbare funktionelle Gruppen, wie beispielsweise Isocyanate oder (Meth)Acrylate aufweisen und cycloaliphatische Epoxide (A5) sowie Kombinationen davon.

Ferner können Oxetane (A6) als kationisch polymerisierbare Komponente (A) zusätzlich in den erfindungsgemäßen Massen in geringen Anteilen enthalten sein. Bevorzugt sind die erfindungsgemäßen Massen jedoch frei von Oxetanen.

Wahlweise kann die kationisch polymerisierbare Komponente (A) zusätzlich einen oder mehrere Alkohole (A7) als Kettenüberträger enthalten.

Beispiele für aromatische Diglycidylether der Komponente (A1) sind Bisphenol-A-Epoxidharze, Bisphenol-F-Epoxidharze, Biphenylglycidylepoxidharze, 4,4'-Biphenylglycidylepoxidharze, 2-Glycidylphenylglycidylether, Naphthalindioldiglycidylether, Glycidylether von Tris(hydroxyphenyl)-methan und Glycidylether von Tris(hydroxyphenyl)-ethan, sowie Mischungen davon. Ferner können auch alle vollständig oder teilweise hydrierten Analoga aromatischer Epoxidharze eingesetzt werden.

Beispiele für aliphatische Diglycidylether der Komponente (A1) sind Hexandioldiglycidylether (z.B. D.E.R. 727 von The Dow Chemical Company), Butandioldiglycidylether (z.B. D.E.R. 731 von The Dow Chemical Company), Dipropylenglykoldiglycidylether (z.B. D.E.R. 736 von The Dow Chemical Company) und Polypropylenglykoldiglycidylether (z.B. D.E.R. 732 von The Dow Chemical Company), sowie Mischungen davon.

Kommerzielle verfügbare Glycidylether (A1) sind unter den Handelsnamen jER YL980, Nanopox A410, jER YL983U, jER 1350, Nanopox A510, Epikote Resin 169, jER YX8000D, YX8000, YX8034, jER 1750 beispielsweise von der Firma Mitsubishi Chemical Europe GmbH oder der Firma Evonik Industries AG erhältlich.

Geeignete Vinyl- und/oder Allylether (A2) sind Trimethylolpropan-Trivinylether, Ethylenglykol-Divinylether, cyclische Vinylether sowie deren Mischungen, Triallylcyanurat und p-Biphenylallylether. Ferner können Vinyl- oder Allylether polyfunktioneller Alkohole eingesetzt werden.

Zusätzlich zu den genannten epoxidhaltigen Verbindungen können auch monofunktionelle Epoxide (A3) verwendet werden. Diese erlauben es, insbesondere die Glasübergangstemperatur der gehärteten Massen zu senken.

Beispiele für kommerziell erhältliche monofunktionelle Epoxide sind Produkte, die unter den Handelsnamen Glycirol ED 509-S von der Firma Adeka, D.E.R. 727 von der Firma Olin, D.E.R. 721 von The Dow Chemical Company, Heloxy Modifier AQ von der Firma Hexion, Cardolite Ultra Lite 513 von der Firma Cardolite oder iPox RD 17 von der Firma iPox Chemicals GmbH vertrieben werden.

Beispiele für Hybridmonomere (A4), die neben einer kationischen polymerisierbaren Gruppe weitere vernetzbare funktionelle Gruppen, wie beispielsweise Isocyanate oder (Meth)Acrylate aufweisen, sind Epoxy Acrylate Solmer SE 1605 erhältlich von der Firma Soltech Ltd., Cyclomer M100 erhältlich von der Firma Daicel, RCX 14-786 von der Firma Rahn AG und 4-Hydroxybutyl Acrylat Glycidylether erhältlich von der Firma Mitsubishi Chemical Europe GmbH.

Cycloaliphatische Epoxide (A5) sind im Stand der Technik bekannt. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methyl-cyclohexancarboxylat, Vinylcyclohexendioxid, Bis(3,4-Epoxycyclohexylmethyl)adipat, Dicyclopentadiendioxid, Diycyclopentadienyloxyethylglycidylether, Limonendioxid und 1,2-Epoxy-6-(2,3-epoxypropoxy)hexahydro-4,7-methanindan, sowie Mischungen davon. Weitere geeignete cycloaliphatische Epoxide können der US 9 212 188 B2, US 2019/0161494 A1 oder US 10 961 345 B2 entnommen werden.

Beispiele für kommerziell erhältliche cycloaliphatische Epoxidverbindungen sind Produkte, die unter den Handelsnamen CELLOXIDE^{™} 2021P, CELLOXIDE^{™} 8000 von der Firma Daicel Corporation, Japan oder Omnilane 1005, Omnilane 2005, Omnilane OC 3005 von der Firma IGM Resins B.V. oder TTA21, TTA26 und TTA60 von der Firma Jiangsu Tetra New Material Technology Co. Ltd. oder Syna Epoxy 21 von der Firma Synasia Inc. oder THI-DE, DE-102, DE-103 von der Firma ENEOS Corporation vertrieben werden.

Beispiele für kommerziell erhältliche Oxetane (A6) sind Bis(1-ethyl-3-oxetanyl-methyl)ether (DOX), 3-Allyloxymethyl-3-ethyloxetan (AQX), 3-Ethyl-3-[(phenoxy)-methyloxetan (POX), 3-Ethyl-3-hydroxymethyl-oxetan (OXA), 1,4-Bis[(3-ethyl-3-oxetanylmethoxy)methyl]benzol (XDO), 3-Ethyl-3-[(2-ethylhexyloxy)methyl]oxetan (EHOX). Die genannten Oxetane sind von der Firma TOAGOSEI CO., LTD, kommerziell verfügbar.

Beispiele für geeignete Alkohole (A7), die als Kettenüberträger dienen können, sind Polyole auf Basis von Polyethern, Polyestern, Polycarbonaten oder Polyacrylaten. Kommerziell verfügbare Poylole sind Produkte, die unter den Handelsnamen ETERNACOLL UM-90 (1/1) und Eternacoll UHC50-200 der Firma UBE Industries Ltd., als Capa^{™} 2200, Capa^{™} 3091 der Firma Perstorp, als Liquiflex H von Petroflex, als Merginol 901 der Firma HOBUM Oleochemicals, als Placcel 305, Placcel CD 205 PL der Firma Daicel Corporation, als Priplast 3172, Priplast 3196 der Firma Croda, als Kuraray Polyol F-3010, Kuraray Polyol P-6010 von Kuraray Co., Ltd., als Krasol LBH-2000, Krasol HLBH-P3000 von Cray Valley oder als Hoopol S-1015-35 oder Hoopol S-1063-35 der Firma Synthesia Internacional SLU verfügbar sind.

Neben den genannten epoxidhaltigen Verbindungen können auch Epoxide zum Einsatz kommen, die durch Oxidation von Vinylverbindungen zugänglich sind. Beispiele hierfür sind epoxidiertes Divinylbenzol oder epoxidierte Vinyl(iso)cyanurate. Letztere sind beispielweise von der Firma Nissan Chemical Corporation unter den Handelsnamen TEPIC-VL oder TEPIC-FL erhältlich.

Die kationisch polymerisierbare Komponente (A) liegt in der erfindungsgemäßen Masse, bezogen auf das Gesamtgewicht der Masse, bevorzugt in einem Anteil von 5 bis 99 Gew.-% vor, besonders bevorzugt in einem Anteil von 10 bis 95 Gew.-%.

Der aromatische oder aliphatische Glycidylether (A1) liegt in der erfindungsgemäßen Masse, bezogen auf das Gesamtgewicht der Masse, in einem Anteil von 2,5 bis 90 Gew.-%, bevorzugt in einem Anteil von 5 bis 75 Gew.-%, besonders bevorzugt in einem Anteil von 10 bis 60 Gew.-% vor. Bezogen auf den Anteil der kationisch polymerisierbaren Komponente (A) liegt der Glycidylether (A1) in einem Anteil von mindestens 60 Gew.-% vor, bevorzugt 70 bis 100 Gew.-% oder 80 bis 100 Gew.-%.

Ferner kann die kationisch polymerisierbare Komponente (A), zusätzlich zur Komponente (A1), einen oder mehrere Vinyl- und/oder Allylether (A2), monofunktionelle Epoxide (A3) und/oder Hybridmonomere (A4) enthalten. In diesem Falle liegen die Komponenten (A2) bis (A4) in Summe in einem Anteil von 0 bis 40 Gew.-% vor, bevorzugt in einem Anteil von 0 bis 30 Gew.-%, jeweils bezogen auf das Gewicht der kationisch polymerisierbaren Komponenten (A).

Weiter bevorzugt enthalten die Massen nur geringe Anteile an cycloaliphatischen Epoxiden (A5) von bis zu 30 Gew.-%, bevorzugt bis zu 20 Gew.-%, bezogen auf den Anteil der Komponente (A). Besonders bevorzugt ist die erfindungsgemäße Masse frei von cycloaliphatischen Epoxiden.

Die erfindungsgemäßen Massen können ferner ein oder mehrere Oxetane (A6) enthalten. Die Komponente (A6) liegt in den Massen in einem Anteil von höchstens 15 Gew.-% vor, bevorzugt in einem Anteil von weniger als 10 Gew.-%, besonders bevorzugt weniger als 5 Gew.-%, jeweils bezogen auf den Anteil der Komponente (A).

Zur Flexibilisierung können die erfindungsgemäßen Massen einen oder mehrere Alkohole (A7) als Kettenüberträger enthalten. Die Komponente (A7) liegt in den erfindungsgemäßen Massen in einem Anteil von höchstens 20 Gew.-% vor, bevorzugt in einem Anteil von weniger als 15 Gew.-%, besonders bevorzugt weniger als 10 Gew.-%, jeweils bezogen auf den Anteil der Komponente (A).

In der Summe liegen die drei Komponenten (A5), (A6) und (A7) in einem Anteil von höchstens 40 Gew.-% vor, bevorzugt höchstens 30 Gew.-%, besonders bevorzugt höchstens 20 Gew.-%, bezogen auf den Anteil der Komponente (A). Höhere Anteile führen dazu, dass die Latenz des in der Masse als Feststoff dispergierten latenten Säurebildners (B) herabgesetzt wird. In Folge erhöht dies die Reaktivität der Massen und verschlechtert die Verarbeitungszeit in unvorteilhafter Weise.

### Komponente (B): latenter Säurebildner

Die erfindungsgemäßen Massen enthalten neben der kationisch polymerisierbaren Komponente (A) mindestens einen latenten Säurebildner (B) zur Initiierung der kationischen Polymerisation, der nach Erwärmen oder Aktivierung durch Bestrahlen mit aktinischer Strahlung eine Säure freisetzt.

Der latente Säurebildner (B) umfasst erfindungsgemäß mindestens einen thermisch latenten Säurebildner (B1) auf Basis eines aromatischen Sulfoniumsalzes, welches durch Erwärmen aktiviert werden kann und eine zur kationischen Polymerisation der Komponente (A) geeignete Säure freisetzt. Der thermisch latente Säurebildner (B1) liegt in den erfindungsgemäßen Massen als ein in der Harzmatrix dispergierter Feststoff vor. Bevorzugt ist mindestens ein an das Sulfoniumkation gebundener aromatischer Rest ein Aralkylrest, besonders bevorzugt ein Benzyl- oder Naphthalenylmethylrest.

Neben mindestens einem Sulfoniumkation kann der thermisch latente Säurebildner (B1) eine Vielzahl von Anionen umfassen. So sind beispielsweise Antimonate, Fluorophosphate, Aluminate, Titanate und Borat-Anionen, wie etwa BF₄⁻ und B(C₆F₅)₄⁻ im Sinne der Erfindung.

Bevorzugt ist die Verwendung von Borat, Aluminat und/oder Antimonat Anionen.

Entsprechende Produkte sind unter den Bezeichnungen SAN-AID SI-B2A, SAN-AID SI-B3A, SAN-AID SI-B7, SAN-AID SI-45, SAN-AID SI-60, SAN-AID SI-80 und SAN-AID SI-100 von der Firma San-Shin Chemical Industry Co. Ltd, erhältlich.

Die voranstehende Aufzählung ist dabei nicht als abschließend zu betrachten. Insbesondere durch Austausch der Anionen gegen weitere schwach koordinierende Anionen erhältliche thermisch latente Säurebildner (B1) sind ebenfalls im Sinne der Erfindung.

Der thermisch latente Säurebildner (B1) ist bezogen auf das Gesamtgewicht der Masse insbesondere in einem Anteil von 0,01 bis 5 Gew.-% enthalten, bevorzugt in Anteilen von 0,3 bis 3 Gew.-%.

Der thermisch latente Säurebildner (B1) liegt in den Massen als partikelförmiger Feststoff vor, der in einer im Wesentlichen aus der Komponente (A) gebildeten flüssigen Matrix dispergiert ist. Die Partikel der Komponente (B1) haben einen Partikeldurchmesser d95 einer laserbeugungsbasierten Partikelgrößenverteilung von höchstens 125 µm, bevorzugt höchstens 75 µm, weiter bevorzugt höchstens 50 µm, und besonders bevorzugt höchstens 35 µm.

Der thermisch latente Säurebildner (B1) kann beispielsweise durch im Stand der Technik gängige physikalische Zerkleinerungsverfahren oder geeignete Zerstäubungstechniken wie Sprühtrocknung in erfindungsgemäßen Partikelgrößenverteilungen erhalten werden. Dabei ist darauf zu achten, dass Temperaturen, die zu einer frühzeitigen Zersetzung des thermisch latenten Säurebildners (B1) führen könnten, nicht überschritten werden.

Liegt der thermische latente Säurebildner (B1) in Form von größeren Partikeln vor, so lässt sich eine geringere Kohäsion der ausgehärteten Masse beobachten, gleichzeitig ist kein homogenes Aushärteverhalten über das gesamte Volumen der Masse erreichbar. Eine Partikelgrößenverteilung mit einem Partikeldurchmesser d95 von größer 125 µm ist nicht im Sinne der Erfindung.

Die gezielte Zugabe von Lösungsmitteln zum Lösen des Initiators wie gamma-Butyrolacton, N-Methyl-2-pyrrolidon, Propylencarbonat, Ethylacetat, Propylenglykolmonomethyletheracetat und Phenylglycidylether ist nicht im Sinne der Erfindung. Besonders bevorzugt sind die Massen frei von Lösungsmittel oder enthalten ausschließlich nicht gezielt zugegebene Spuren an Lösungsmitteln, die beispielsweise bereits in den verwendeten Rohstoffen enthalten sind. Spuren der genannten Lösungsmittel können in einem Anteil von bis zu 5000 ppm toleriert werden, bevorzugt bis zu 2500 ppm. Auch in diesem Fall gelten die Massen noch als lösungsmittelfrei.

Der Schmelzpunkt des thermisch latenten Säurebildners (B1) bei Raumtemperatur beträgt vorzugsweise 60 bis 150°C, bevorzugt mindestens 80 °C, weiter bevorzugt mindestens 90 °C, besonders bevorzugt mindestens 100 °C.

Neben dem thermisch latenten Säurebildner (B1) enthalten die Massen wahlweise einen photolatenten Säurebildner (B2) als Photoinitiator für die kationische Polymerisation. Dieser kann durch aktinische Strahlung aktiviert werden und ermöglicht eine zusätzliche Fixierung der Masse.

Der photolatente Säurebildner (B2) ist dabei strukturell nicht weiter eingeschränkt und umfasst beispielsweise Initiatoren auf Basis von Oniumverbindungen.

Bevorzugte Oniumverbindungen sind aus der Gruppe der Arylsulfoniumsalze, insbesondere Triarylsulfoniumsalze, und Aryliodoniumsalze sowie Kombinationen davon ausgewählt, wie sie im Stand der Technik beschrieben sind.

Kommerziell als photolatente Säurebildner verfügbare Photoinitiatoren auf Triarylsulfoniumbasis sind unter den Markennamen Chivacure 1176, Chivacure 1190 von der Firma Chitech, Irgacure 290, Irgacure 270, Irgacure GSID 26-1 von der Firma BASF, Speedcure 976 und Speedcure 992 von Lambson, TTA UV-692, TTA UV-694 von der Firma Jiangsu Tetra New Material Technology Co., Ltd. oder UVI-6976 und UVI-6974 von der Firma Dow Chemical Co. erhältlich.

Kommerziell als photolatente Säuren verfügbare Photoinitiatoren auf Diaryliodoniumbasis sind u.a. unter den Markennamen UV1242 oder UV2257 von der Firma Deuteron und Bluesil 2074 von der Firma Bluestar erhältlich.

Neben photolatenten Säurebildnern auf Basis von Oniumverbindungen sind auch nichtionische photolatente Säurebildner in den erfindungsgemäßen Massen verwendbar. Derartige Verbindungen auf Basis von Oximestern und Oximsulfonsäureestern werden in der WO 2013/083505 A und der EP 1 124 832 A beschrieben. Kommerziell verfügbare nichtionische photolatente Säurebildner auf Basis von Oximsulfonsäureestern sind unter anderem unter den Bezeichnungen Irgacure PAG 103, Irgacure PAG 121 und Irgacure PAG 203, CGI 1907 von der Firma BASF verfügbar.

Die voranstehenden Aufzählungen sind als beispielhaft für den photolatenten Säurebildner (B2) zu sehen und keineswegs als limitierend zu verstehen.

Die in den erfindungsgemäßen Massen eingesetzten Photoinitiatoren (B2) sind vorzugsweise durch Bestrahlen mit aktinischer Strahlung einer Wellenlänge von 200 bis 480 nm aktivierbar, besonders bevorzugt von 250 bis 400 nm.

Der Photoinitiator (B2) ist bezogen auf das Gesamtgewicht der Masse insbesondere in einem Anteil von 0 bis 5 Gew.-% enthalten, bevorzugt in Anteilen von 0 bis 3 Gew.-%.

### Komponente (C): Stabilisator

Neben den Komponenten (A) und (B) enthalten die erfindungsgemäßen Massen mindestens einen Stabilisator (C). Dieser ist insbesondere dazu geeignet, reaktive Intermediate zu stabilisieren und somit ein unkontrolliertes Aushärten der Massen zu verhindern. Dadurch wird eine ausreichend hohe Latenz bei Raumtemperatur gewährleistet und eine Einstellung der Verarbeitungszeit der Massen ermöglicht.

Mögliche Stabilisatoren (C) sind quartäre Ammoniumsalze, Hydroxylamine, cylische Amide, Imidazole, Nitrile, Hydrochinone, organische Phosphite und Phosphate, Pyridine, Kronenether, Kupfersalze, cyclische Imine, Sulfoniumalkylsulfonate, Thioether oder Isocyanurate. Spezifische Beispiele können der US 5 453 450 A, US 5 362 421 A, US 5 296 567 A, US 5 374 697 A, JP 2015 025 082 A, KR 891 414 B1, US 2019 0 225 740 A1, US 2020 0 190 251 A1 oder der JP 2005 120 190 A, entnommen werden.

Spezifische Stabilisatoren im Sinne der Erfindung sind (4-Hydroxyphenyl)dimethylsulfonium-Methylsulfat erhältlich unter dem Handelsnamen SAN-AID SI-S, 4-(Methylthio)phenol erhältlich unter dem Handelsnamen San-Aid SI-ME, jeweils von der Firma San-Shin Chemical Industry Co. Ltd., oder zwitterionische Verbindungen wie Betaine oder Aminosäuren.

Der Stabilisator (C) liegt in der erfindungsgemäßen Masse bevorzugt in einem Anteil von 0,01 bis 5 Gew.-%, bevorzugt 0,01 bis 3 Gew.-%, besonders bevorzugt 0,05 bis 2 Gew.-% vor, jeweils bezogen auf das Gesamtgewicht der Masse.

### Komponente (D): Strahlungshärtbare Verbindungen

Wahlweise enthalten die Masse neben den Komponenten (A) bis (C) weitere strahlungshärtbare Verbindungen (D), die durch Bestrahlen mit aktinischer Strahlung radikalisch polymerisiert werden können.

Die strahlungshärtbaren Verbindungen (D) sind bevorzugt strahlungshärtbare Verbindungen auf Basis von (Meth)Acrylaten. Diese sind in ihrer chemischen Struktur nicht weiter eingeschränkt. Beispielsweise können sowohl aliphatische als auch aromatische (Meth)Acrylate verwendet werden. Als (Meth)Acrylate werden hier und im Folgenden sowohl die Derivate der Acrylsäure als auch der Methacrylsäure sowie Kombinationen und Mischungen davon bezeichnet.

Die strahlungshärtbaren Verbindungen (D) können dazu eingesetzt werden, um durch eine Bestrahlung der Massen eine schnelle Lichtfixierung zu erzielen.

Geeignet sind beispielsweise die folgenden strahlungshärtbaren Verbindungen: Isobornylacrylat, Stearylacrylat, Tetrahydrofurfurylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid, 4-Butandioldiacrylat, 1,6-Hexandioldiacrylat, 1,10-Decandioldiacrylat, Tricyclodecandimethanoldiacrylat, Dipropylenglycoldiacrylat, Tripropylen-glycoldiacrylat, Polybutadiendiacrylat, Cyclohexandimethanoldiacrylat, Diurethanacrylate von monomeren, oligomeren oder polymeren Diolen und Polyolen, Trimethylolpropantriacrylat (TMPTA), und Dipentaerythritolhexaacrylat (DPHA), und Kombinationen davon. Auch von mehrfach verzweigten oder dendrimeren Alkoholen abgeleitete höherfunktionelle Acrylate können vorteilhaft verwendet werden

Die analogen Methacrylate sind ebenfalls im Sinne der Erfindung.

Bevorzugt ist die strahlungshärtbare Verbindung mindestens difunktionell.

Weiterhin eignen sich auch strahlungshärtbare Verbindungen (D) mit Allylgruppen, wie beispielsweise 1,3,5-Triazin-2,4,6(1H,3H,5H)-trion, das kommerziell als TAICROS^{®} erhältlich ist. Auch unhydrierte Polybutadiene mit freien Doppelbindungen wie beispielsweise die Poly BD^{®}-Typen können als strahlungshärtbare Verbindung (D) eingesetzt werden.

Als höhermolekulare strahlungshärtbare Verbindung (D) können Urethanacrylate auf Basis von Polyestern, Polyethern, Polycarbonatdiolen, Polybutadiendiolen und/oder hydrierten Polybutadiendiolen als Komponente (D) zum Einsatz kommen.

Eine Kombination mehrerer strahlungshärtbarer Verbindungen (D) ist ebenfalls im Sinne der Erfindung.

Die strahlungshärtbare Verbindung (D) liegt in der erfindungsgemäßen Masse bevorzugt in einem Anteil von bis zu 50 Gew.-% vor, besonders bevorzugt in einem Anteil von bis zu 30 Gew.-%, jeweils bezogen auf das Gesamtgewicht der Masse.

### Komponente (E): Initiator für die radikalische Polymerisation

Neben den Komponenten (A) bis (D) enthalten die Massen wahlweise noch einen Initiator (E) zur Aktivierung der radikalischen Polymerisation, vorzugsweise einen Photoinitiator.

Als Photoinitiatoren können die üblichen, im Handel erhältlichen Verbindungen eingesetzt werden, wie beispielsweise α-Hydroxyketone, Benzophenon, α,α'-Diethoxyacetophenon, 4,4'-Diethylaminobenzophenon, 2,2-Dimethoxy-2-phenyl-acetophenon, 4-Isopropylphenyl-2-hydroxy-2-propylketon, 1-Hydroxy-cyclohexylphenylketon, Isoamyl-p-dimethylaminobenzoat, Methyl-4-dimethyl-aminobenzoat, Mehtyl-o-benzoylbenzoat, Benzoin, Benzoinethylether, Benzoinisopropylether, Benzoinisobutylether, 2-Hydroxy-2-methyl-1-phenyl-propan-1-on, 2-Isopropylthioxanthon, Dibenzosuberon, 2,4,6-Trimethylbenzoyl-diphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren für die radikalische Polymerisation können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L.

Ferner sind die DAROCUR^{®}-Typen von BASF SE verwendbar, so beispielsweise die Typen DAROCUR MBF, DAROCUR 1173, DAROCUR TPO und DAROCUR 4265.

Der in den erfindungsgemäßen Massen als Komponente (E) eingesetzte Photoinitiator ist vorzugsweise durch Bestrahlen mit aktinischer Strahlung einer Wellenlänge von 200 bis 480 nm aktivierbar, besonders bevorzugt von 250 bis 400 nm.

Der Initiator (E) liegt in der erfindungsgemäßen Masse in einem Anteil von 0 bis 5 Gew.-% vor, bevorzugt in einem Anteil von 0,01 bis 3 Gew.-%, bezogen auf das Gesamtgewicht der Masse.

Des Weiteren kann der Initiator für die radikalische Polymerisation (E) zusätzlich einen thermischen Initiator umfassen, der durch Erwärmen auf eine vorbestimmte Temperatur aktiviert werden kann. Dieser gewährleistet eine vollständige Aushärtung der radikalisch strahlungshärtbaren Verbindung (D). Bevorzugt umfasst der zusätzliche thermische Initiator eine oder mehrere Peroxoverbindungen. Diese können beispielsweise ausgewählt werden aus der Gruppe der Peroxo(di)ester, Hydroperoxide, (Di)Alkylperoxide, Ketonperoxide, Perketale, Persäuren, Peroxomonocarbonate und Peroxodicarbonate.

Der thermische Initiator liegt in den erfindungsgemäßen Massen bevorzugt in einem Anteil von bis 10 Gew.-% vor, bezogen auf die Komponente (E)

### Komponente (F): Zusatzstoffe

Die beschriebenen Massen können darüber hinaus noch fakultative Bestandteile als Zusatzstoffe (F) enthalten.

Die Zusatzstoffe (F) sind vorzugsweise ausgewählt aus der Gruppe bestehend aus Füllstoffen, Farbstoffen, Pigmenten, Alterungsschutzmitteln, Fluoreszenzmitteln, Sensibilisierungsmitteln, Beschleunigern, Stabilisatoren, Haftvermittlern, Trockenmitteln, Vernetzern, Fließverbesserern, Benetzungsmitteln, Thixotropierungsmitteln, nicht-reaktiven Flexibilisierungsmitteln, nicht-reaktiven polymeren Verdickungsmitteln, Flammschutzmitteln, Korrosionsinhibitoren, Weichmachern und Kombinationen davon.

Die Zusatzstoffe (F) liegen in der erfindungsgemäßen Masse insbesondere in einem Anteil von bis zu 85 Gew.-% vor, bezogen auf das Gesamtgewicht der Masse.

Die Zusatzstoffe (F) werden im Sinne der Erfindung so ausgewählt, dass keine Lösungsmittel und/oder andere Substanzen verwendet werden, die zu einem mindestens teilweise Lösen der Komponente (B1) in der Masse führen können.

Sensibilisierungsmittel (F1) als Zusatzstoffe sind nachfolgend näher beschrieben.

### Sensibilisierungsmittel (F1)

Die Sensibilisierungsmittel (F1) dienen dazu, eine Aktivierung des Photoinitiators (B2) und/oder (E) bei einer bestimmten Anregungswellenlänge zu ermöglichen. Bevorzugt wird eine rotverschobene Aktivierung des Initiators ermöglicht. Beispiele für geeignete Sensibilisierungsmittel (F1) sind Anthracen, Perylen, Phenothiazin, Xanthon, Thioxanthon, Benzophenon, Ethyl-4-dimethylaminobenzoat oder sterisch gehinderte Amine.

Insbesondere können Thioxanthonderivate eingesetzt werden, wie beispielsweise 2,4-Diethylthioxanthon (DETX), 1-Chlor-4-propoxythioxanthon (CPTX) und Isopropyl Thioxanthon (ITX), die kommerziell von der Firma Lambson erhältlich sind.

Anthracenderivate wie 2-Ethyl-9,10-dimethoxyanthracen (EDMA), 9-hydroxy-methylanthracen (HMA), 9,10-Dibutoxyanthracen, erhältlich von der Firma Sigma-Aldrich, können ebenso verwendet werden.

Die voranstehende Aufzählung ist als beispielhaft und nicht abschließend zu verstehen.

Das Sensibilisierungsmittel (F1) ist in der Masse bevorzugt in einem Anteil von 0 bis 5 Gew.-% enthalten, weiter bevorzugt in Anteilen von 0 bis 3 Gew.-%, und besonders bevorzugt von 0 bis 1 Gew.-%, jeweils bezogen auf das Gesamtgewicht der Masse.

### Formulierung der kationisch polymerisierbaren Massen

Eine Formulierung der Massen umfasst mindestens die oben beschriebenen Komponenten (A), (B1) und (C).

Gemäß einer ersten Ausführungsform umfasst oder besteht die Masse bevorzugt aus den folgenden Komponenten, jeweils bezogen auf das Gesamtgewicht der Masse:
A) mindestens einer kationisch polymerisierbaren Komponente (A) in einem Anteil von 5 bis 99 Gew.-%, wobei die kationisch polymerisierbare Komponente (A) mindestens einen difunktionellen aliphatischen oder aromatischen Glycidylether (A1) enthält und wahlweise weitere kationisch polymerisierbare Bestandteile aus der Gruppe der Vinyl- und/oder Allylether (A2), monofunktionellen Epoxide (A3), Hybridmonomere (A4), cycloaliphatischen Epoxide (A5), Oxetane (A6) und Alkohole (A7), und wobei der Anteil des Glycidylethers (A1) an der kationisch polymerisierbaren Komponente (A) mindestens 60 Gew.-% beträgt;
B) mindestens einem thermisch latenten Säurebildner (B1) auf Basis eines aromatischen Sulfoniumsalzes in einem Anteil von 0,01 bis 5 Gew.-% und wahlweise einem Photoinitiator (B2) für die kationische Polymerisation;
C) mindestens einem Stabilisator (C) in einem Anteil von 0,01 bis 5 Gew.-%;
D) mindestens einer durch radikalische Polymerisation strahlungshärtbaren Verbindung (D) in einem Anteil von 0 bis 50 Gew.-%;
E) mindestens einem Initiator für die radikalische Polymerisation (E), bevorzugt einem Photoinitiator, in einem Anteil von 0 bis 5 Gew.-%; und
F) wahlweise weiteren Zusatzstoffen,
wobei der thermisch latente Säurebildner (B1) als Feststoff in der Masse dispergiert ist.

Gemäß einer zweiten Ausführungsform umfasst oder besteht die Masse aus den oben genannten Komponenten (A) bis (F), wobei die strahlungshärtbare Verbindung (D) in einem Anteil von 1 bis 50 Gew.-% und der Initiator (E) in einem Anteil von 0,01 bis 5 Gew.-% enthalten sind, jeweils bezogen auf das Gesamtgewicht der Masse.

In einer weiteren Ausführungsform besteht die Masse aus den Komponenten (A) bis (C) und wahlweise (F).

In allen beschriebenen Ausführungsformen liegt der thermisch latente Säurebildner (B1) als ein in Form von Partikeln in der Masse dispergierter Feststoff vor. Die Partikel des latenten Säurebildners (B1) haben eine durch Laserbeugung bestimmte Partikelgrößenverteilung mit einem Partikeldurchmesser d95 von höchstens 125 µm, bevorzugt höchstens 75 µm, weiter bevorzugt höchstens 50 µm, und besonders bevorzugt höchstens 35 µm.

Überraschenderweise hat sich gezeigt, dass das Vorliegen des thermisch latenten Säurebildners (B1) in fester Form dazu führt, dass die Reaktivität im Vergleich zu ansonsten analogen Massen höher ist, in denen der Säurebildner homogen verteilt in flüssiger Phase vorliegt. Dementsprechend sind die erfindungsgemäßen Massen bevorzugt in dem Maße frei von Lösungsmitteln oder anderen polaren Bestandteilen, die den in fester Phase dispergierten Säurebildner lösen können.

Durch Verwendung eines in fester Form dispergiert vorliegenden Säurebildners (B1) lassen sich die Massen bei niedrigeren Temperaturen und in kürzeren Zeiten vollständig härten, als dies bei vergleichbaren Massen der Fall ist, bei denen der Säurebildner (B1) homogen gelöst vorliegt.

### Eigenschaften der erfindungsgemäßen Massen

Die erfindungsgemäßen Massen eignen sich für das Verkleben, Vergießen, Abformen, Abdichten und Beschichten von Substraten. Durch ihre Eigenschaft bereits bei niedrigen Temperaturen zuverlässig aushärtbar zu sein, können die Massen insbesondere in Fertigungsprozessen eingesetzt werden, bei denen ein hoher Eintrag thermischer Energie nicht toleriert wird, wie beispielsweise im Bereich der Optoelektronik.

Die Massen können bei Temperaturen von 60 bis 100 °C, innerhalb einer Zeit von 10 bis 120 min, bevorzugt innerhalb von 10 bis 90 min, gehärtet werden.

Gleichzeitig besitzen die Massen eine Verarbeitungszeit bei Raumtemperatur von mindestens 72 h, bevorzugt 96 h, besonders bevorzugt 120 h.

Mit den erfindungsgemäßen Massen lässt sich im gehärteten Zustand auf Substraten wie plattiertem Aluminium eine Festigkeit von > 5 MPa, bevorzugt > 10 MPa, besonders bevorzugt > 15 MPa erzielen. Auch nach Temperatur- und Feuchteeinwirkung sinkt diese Festigkeit nur in geringem Maße.

Die Massen liegen bevorzugt als Einkomponentenmasse vor.

Durch Zusatz der wahlweisen Komponenten (B2) und/oder (D) und (E) lassen sich die erfindungsgemäßen Massen zusätzlich lichtfixierbar ausgestalten. Bevorzugt sind die Initiatoren (B2) und (E) durch Bestrahlen mit einer Wellenlänge von 200 bis 480 nm aktivierbar, besonders bevorzugt von 250 bis 400 nm.

### Verfahren unter Verwendung der erfindungsgemäßen Massen

Ein Arbeitsverfahren unter Verwendung der erfindungsgemäßen Masse umfasst die folgenden Schritte:
a) Bereitstellen einer kationisch härtbaren Masse gemäß der obigen Beschreibung;
b) Dosieren der Masse auf ein erstes Substrat;
c) wahlweise Zuführen eines zweiten Substrates zur Masse auf dem ersten Substrat unter Bildung eines Substratverbundes;
d) Wahlweise Bestrahlen der Masse mit aktinischer Strahlung unter Aktivierung des photolatenten Säurebildners (B2) und/oder des Initiators für die radikalische Polymerisation (E); und
e) Erwärmen der Masse auf dem ersten Substrat oder in dem Substratverbund.

Falls die erfindungsgemäßen Massen einen Photoinitiator (B2) für die kationische Polymerisation oder zusätzliche radikalische polymerisierbare Verbindungen (D) enthalten, können die Massen in Schritt d) zusätzlich durch Bestrahlen fixiert werden.

Durch eine abschließende Warmhärtung in Schritt e) werden die Massen in einen endgehärteten Zustand überführt und erreichen ihre maximale Festigkeit.

### Verwendete Messverfahren und Definitionen

### Bestrahlung

Zur Aktivierung des Photoinitiators (B2) und/oder (E) wurden die erfindungsgemäßen Massen mit einer LED-Lampe DELOLUX 20 / 365 der Firma DELO Industrie Klebstoffe GmbH & Co. KGaA mit einem Emissionsmaximum bei 365nm mit einer Intensität von 200 ± 20 mW/cm² für eine Dauer von 30 s bestrahlt.

### Aushärtung

"Vernetzung" oder "Aushärtung" werden definiert als Polymerisations- oder Additionsreaktion über den Gelpunkt hinaus. Der Gelpunkt ist der Punkt, an dem das Speichermodul G' gleich dem Verlustmodul G" wird.

### Viskosität

Die Viskosität wurde mit einem Rheometer Physica MCR302 der Firma Anton Paar mit einem standardisierten Messkegel PP20 bei 23 °C mit einem 200 µm Spalt gemessen und bei einer Scherrate von 10/Sekunde bestimmt. Zur Beurteilung der Verarbeitbarkeit bei Raumtemperatur wurde die Viskositätsmessung nach 24 h bzw. 72 h wiederholt. Die erfindungsgemäßen Massen sind über einen Zeitraum von mindestens 72 h verarbeitbar. Dieses Kriterium ist erfüllt, wenn bei einer Lagerung bei Raumtemperatur der Viskositätsanstieg über einen Zeitraum von 72 h weniger als 25 % beträgt.

### Partikelgrößenverteilung

Die Partikelgrößenverteilung wurde mit einem Partikelgrößen-Analysator S3500 der Firma Microtrac durch Laserlichtbeugung in Anlehnung an die ISO 13320 bestimmt. Die mit der Größe d95 angegebene Verteilung bezieht sich auf den volumetrischen Teilchendurchmesser.

### Druckscherfestigkeit

Jeweils zwei Probekörper (Abmessungen 20 mm * 20 mm * 5 mm) aus plattiertem Aluminium wurden mit 5 mm Überlappung unter Verwendung der jeweiligen Masse verklebt. Dazu wurde auf den ersten Probekörper eine Raupe aus der Masse aufgetragen. Danach wurde ein zweiter Probekörper gefügt. Die Klebschichtdicke von 0,1 mm und die Überlappung wurden durch eine Verklebevorrichtung eingestellt. Die gefügten Proben werden für 60 min bei 80 °C ausgehärtet. Die Druckscherfestigkeit beträgt mindestens 5 MPa.

### Raumtemperatur

Raumtemperatur ist definiert als 23 ± 2 °C.

### Beurteilung der Lichtfixierung

Zur Beurteilung der Lichtfixierung (fest vs. flüssig) werden die Massen einer optischen Beurteilung unterzogen. Optional erfolgt eine haptische Prüfung unter Zuhilfenahme eines Kunststoffspatels.

### Photo DSC-Messungen

DSC-Messungen der Reaktivität der strahlungsinduzierten Härtung erfolgen in einem dynamischen Differenzkalorimeter (DSC) vom Typ DSC3+ der Firma Mettler Toledo. Dazu werden 6 - 10 mg der flüssigen Probe in einen Aluminiumtiegel (40 µL) mit Pin eingewogen und bei 30 °C für 10 min mit 365 nm belichtet.

Ausgewertet werden die Peakzeit und Enthalpie nach Subtraktion des durch die LED-Lampe verursachten Energieeintrags.

### Thermische DSC-Messungen

DSC-Messungen der Reaktivität erfolgen in einem dynamischen Differenzkalorimeter (DSC) vom Typ DSC2 oder DSC3+ der Firma Mettler Toledo.

6-10 mg der flüssigen Probe werden dazu in einen Aluminiumtiegel (40 µL) mit Pin eingewogen, mit einem Deckel verschlossen und einer Messung von 30 - 220 °C bei einer Heizrate von 10 K/min unterzogen. Prozessgas ist Luft (Volumenstrom 30 mL/min).

Ausgewertet werden der Onset, Enthalpie und die Peaktemperatur.

### Herstellung der härtbaren Massen

Zur Herstellung der in den folgenden Beispielen verwendeten kationisch härtbaren Massen werden zunächst die flüssigen Bestandteile gemischt und anschließend wahlweise Füllstoffe und der Initiator (B1) mithilfe eines Laborrührwerks, Labordissolvers oder eines Speedmixers (Firma Hauschild) eingearbeitet, bis eine homogene Masse entsteht. Massen, die Photoinitiatoren enthalten und die sensitiv gegenüber sichtbaren Licht sind, müssen entsprechend unter Licht außerhalb der Anregungswellenlänge der Photoinitiatoren oder Sensibilisatoren hergestellt werden.

In der nachfolgenden Liste sind alle zur Herstellung der härtbaren Massen verwendeten Verbindungen und deren Abkürzungen angegeben:

### Komponente (A): Kationisch polymerisierbare Komponenten

(A1-1): Hydrierter Bisphenol-A-Diglycidylether, erhältlich unter dem Handelsnamen jER YX8000D von der Firma Mitsubishi Chemical Europe GmbH.
(A1-2): Epoxidiertes Trivinylalkylisocyanurat, erhältlich unter dem Handelsnamen TEPIC-FL von der Firma Nissan Chemical Corporation.
(A4-1): Mit Acrylsäure partial veresterter Bisphenol-A-Diglycidylether, erhältlich unter dem Handelsnamen Epoxy Acrylate Solmer SE 1605 von der Firma Soltech Ltd.
(A5-1): 3,4-Epoxycyclohexylmethyl-3',4'-epoxycyclohexancarboxylat, erhältlich unter dem Handelsnamen Celloxide 2021P von der Firma Daicel.
(A6-1): OXT-101 = 3-Ethyl-3-hydroxymethyl-oxetan erhältlich von der Firma Toagosei.

### Komponente (B): latenter Säurebildner

(B1-1): (4-Hydroxyphenyl)methyl(1-naphthalenylmethyl)sulfonium-Hexafluoroantimonat, erhältlich unter dem Handelsnamen San-Aid SI-60 von der Firma Sanshin Chemical Industry Co., Ltd. (wärmelatenter Säurebildner)
(B1-2): [4-[(methoxycarbonyl)oxy]phenyl]methyl)phenylmethyl)sulfonium Hexafluoroantimonat, erhältlich unter dem Handelsnamen San-Aid SI-45 von der Firma Sanshin Chemical Industry Co., Ltd. (wärmelatenter Säurebildner)
(B1-3): Quartäres Benzylammoniumsalz, erhältlich unter dem Handelsnamen K-Pure CXC-1733 von der Firma King Industries Inc. (wärmelatenter Säurebildner, Vergleichsbeispiel)

### Komponente (C): Stabilisator

(C-1): Betain wasserfrei, erhältlich von der Firma TCI Germany GmbH.

### Komponente (D): radikalische strahlungshärtbare Verbindungen

(D-1) Isobornylacrylat, erhältlich unter dem Handelsnamen Visiomer IBOA von der Firma Evonik Industries.

### Komponente (E): Photoinitiator für die radikalische Polymerisation

(E-1) (Hydroxycyclohexyl)phenylketon, erhältlich unter dem Handelsnamen Irgacure 184 von der Firma BASF SE.

### Komponente (F): Zusatzstoffe

(F-1) Pyrogene, amorphe Kieselsäure, erhältlich unter dem Handelsnamen Cab-O-Sil TS-382 von der Firma Cabot Corporation.
(F-2) Calcit, erhältlich unter dem Handelsnamen Ulmer Weiß XMF von der Firma Eduard Merkle GmbH & Co. KG.
(F-3) Quarz, erhältlich unter dem Handelsnamen Denka Fused Silica FB-7SDX von der Firma Denka Company Ltd.

### Ausführungsbeispiele

Die kationisch härtbaren Massen wurden mit den in der nachfolgenden Tabelle angegebenen Anteilen der Komponenten (A) bis (F) formuliert. Die erfindungsgemäßen Beispiele 1 bis 6 wurden den Vergleichsbeispielen 7 bis 12 gegenübergestellt. Die Anteile der Komponenten sind jeweils in Gew.-% angegeben, bezogen auf das Gesamtgewicht der Masse.

| **Komponente** | **Erfindungsgemäße Beispiele** | | | | | | **Vergleichsbeispiele** | | | | | |
|---|---|---|---|---|---|---|---|---|---|---|---|---|
| **Bsp. Nummer** | **1** | **2** | **3** | **4** | **5** | **6** | **7** | **8** | **9** | **10** | **11** | **12** |
| **Komponente (A): Kationisch polymerisierbare Verbindungen** | | | | | | | | | | | | |
| (A1-1) | 84,44 | 96,47 | 96,47 | 75,17 | 75,17 | 37,985 | 96,47 | 96,47 | 95,47 | 48,37 | 48,37 | 32,33 |
| (A1-2) | 10,00 | - | - | 9,40 | 9,40 | - | - | - | - | - | - | - |
| (A4-1) | - | - | - | - | - | 5,00 | - | - | - | - | - | - |
| (A5-1) | - | - | - | 9,40 | - | - | - | - | - | 48,10 | - | 32,07 |
| (A6-1) | - | - | - | - | 9,40 | - | - | - | - | - | 48,10 | 32,07 |

| **Komponente (B): latenter Säurebildner** | | | | | | | | | | | | |
|---|---|---|---|---|---|---|---|---|---|---|---|---|
| (B1-1) | - | 1,00²⁾ | 1,00³⁾ | 1,00³⁾ | 1,00³⁾ | 1,00³⁾ | 1,00¹⁾ | - | 2,00⁴⁾ | 1,00³⁾ | 1,00³⁾ | 1,00³⁾ |
| (B1-2) | 0,50³⁾ | - | - | - | - | - | - | - | - | - | - | - |
| (B1-3) | - | - | - | - | - | - | - | 1,00 | - | - | - | - |

| **Komponente (C): Stabilisator** | | | | | | | | | | | | |
|---|---|---|---|---|---|---|---|---|---|---|---|---|
| (C-1) | 0,06 | 0,03 | 0,03 | 0,03 | 0,03 | 0,015 | 0,03 | 0,03 | 0,03 | 0,03 | 0,03 | 0,03 |

| **Komponente (D): Radikalisch strahlungshärtende Verbindungen** | | | | | | | | | | | | |
|---|---|---|---|---|---|---|---|---|---|---|---|---|
| (D-1) | - | - | - | - | - | 5,00 | - | - | - | - | - | - |

| **Komponente (E): Photoinitiator für die radikalische Polymerisation** | | | | | | | | | | | | |
|---|---|---|---|---|---|---|---|---|---|---|---|---|
| (E-1) | - | - | - | - | - | 0,50 | - | - | - | - | - | - |

| **Komponente (F): Zusatzstoffe** | | | | | | | | | | | | |
|---|---|---|---|---|---|---|---|---|---|---|---|---|
| (F-1) | 2,50 | 2,50 | 2,50 | 2,50 | 2,50 | 2,50 | 2,50 | 2,50 | 2,50 | 2,50 | 2,50 | 2,50 |
| (F-2) | 2,50 | | | 2,50 | 2,50 | - | - | - | - | - | - | - |
| (F-3) | - | - | - | - | - | 48,00 | - | - | - | - | - | - |

| | | | | | | | | | | | | |
|---|---|---|---|---|---|---|---|---|---|---|---|---|
| ¹⁾ Anlieferungsform, d95 < 285 µm ²⁾ Gemahlen, d95 < 75 µm ³⁾ Gemahlen, d95 < 32 µm ⁴⁾ Vorlösung in Propylencarbonat (50 Gew.-%) | | | | | | | | | | | | |

| | **Erfindungsgemäße Beispiele** | | | | | | **Vergleichsbeispiele Gew.-%** | | | | | |
|---|---|---|---|---|---|---|---|---|---|---|---|---|
| **Bsp. Nummer** | **1** | **2** | **3** | **4** | **5** | **6** | **7** | **8** | **9** | **10** | **11** | **12** |

| **Beobachtungen / Eigenschaften** | | | | | | | | | | | | |
|---|---|---|---|---|---|---|---|---|---|---|---|---|
| Viskositätsänder ung nach 3d@23°C/50%r. H. [%] | + 15 | +10 | +9 | +16 | +23 | +3 | +5 | +2 | +3 | +1590 | ausgehärtet | ausgehärtet |
| Peakzeit [s] | n.b. | n.b. | n.b. | n.b. | n.b. | 2,7 | n.b. | n.b. | n.b. | n.b. | n.b. | n.b. |
| Druckscherfesti gkeiten Al plattiert/Al plattiert [MPa] | 17 | 21 | 16 | 17 | 10 | 30 | 2,5 | 3,5 | 4 | 25 | 30 | 20 |
| Onset [°C] | 93 | 85 | 85 | 89 | 83 | 90 | 93 | 106 | 99 | 32 | 65 | 62 |
| Peak [°C] | 109 | 111 | 112 | 112 | 105 | 107 | 112 | 122 | 117 | 104 | 95 | 92 |
| Enthalpie [J/g] | -255 | -451 | -466 | -400 | -376 | -219 | -365 | -440 | -338 | -563 | -605 | -600 |

Die Beispiele 1 bis 5 enthalten entsprechend der ersten Ausführungsform jeweils einen Glycidylether (A1-1) und wahlweise weitere kationisch polymerisierbare Komponenten (A). Außerdem enthalten die Massen einen thermisch latenten Säurebildner (B1) auf Basis eines aromatischen Sulfoniumsalzes, der als Feststoff in den Massen dispergiert vorliegt. Der in den erfindungsgemäßen Beispielen eingesetzte thermisch latente Säurebildner (B) liegt in einer Partikelgrößenverteilung mit einem Partikeldurchmesser im Bereich von d95 < 32 µm bis d95 < 75 µm vor. In allen Beispielen wird die erforderliche Verarbeitungszeit von 72 h bei Raumtemperatur erreicht. Die Massen zeigen außerdem die geforderten Druckscherfestigkeiten von > 5 MPa.

Beispiel 6 enthält neben dem Glycidylether (A1-1) ein Epoxy-Acrylat-Hybridmonomer (A1-4) und ein cycloaliphatisches Epoxid (A1-5) als kationisch polymerisierbare Komponente (A). Außerdem ist die Masse durch Zugabe einer radikalisch härtbaren Verbindung (D) und eines Photoinitiators für die radikalische Polymerisation (E), gemäß der zweiten Ausführungsform dualhärtend. Auch Beispiel 6 erfüllt die Anforderung an eine ausreichende Verarbeitungszeit bei gleichzeitig hoher Reaktivität und hoher Festigkeit der gehärteten Masse.

Vergleichsbeispiel 7 enthält einen latenten Säurebildner (B) mit einer Partikelgrößenverteilung d95 < 285 µm. Die hohe Partikelgröße führt zu Fehlstellen in der gehärteten Masse. Die geforderte Druckscherfestigkeit > 5 MPa wird nicht erreicht.

Vergleichsbeispiel 8 enthält einen latenten Säurebilder (B) auf Basis eines aromatischen Ammoniumsalzes (B1-3). Die Masse härtet nicht innerhalb der vorgegebenen Zeit und Temperatur aus. Die erforderliche Druckscherfestigkeit > 5 MPa wird nicht erreicht.

Vergleichsbeispiel 9 enthält den latenten Säurebildner (B) in gelöster Form. Die Masse zeigt im Vergleich zu analogen Formulierungen mit einem latenten Säurebildner (B), der als Feststoff in den Massen dispergiert vorliegt, eine verringerte Reaktivität und erzielt nicht die geforderte Druckscherfestigkeit von > 5 MPa.

Vergleichsbeispiel 10 enthält einen Anteil des Glycidylethers von weniger als 60 Gew.-% und zusätzlich einen Anteil des cycloaliphatischen Epoxids (A5-1) von mehr als 30 Gew.-%, bezogen auf die Komponente (A). Nach 72 h Lagerung bei Raumtemperatur steigt die Viskosität stark an. Der Anstieg übersteigt die geforderte Grenze von 25% deutlich. Die Masse ist damit nicht mehr verarbeitbar.

Vergleichsbeispiel 11 enthält ebenfalls einen Anteil des Glycidylethers von weniger als 60 Gew.-%, sowie einen Anteil an Oxetan (A6-1) von mehr als 15 Gew.-%. Die Masse war nach 72 h bereits vollständig ausgehärtet und ist somit nicht verarbeitbar.

Vergleichsbeispiel 12 enthält sowohl ein cycloaliphatisches Epoxid (A5-1) als auch ein Oxetan (A6-1) über den geforderten Höchstmengen. Der Anteil des Glycidylethers beträgt weniger als 60 Gew.-%. Die Masse war nach 72 h Lagerung bereits vollständig ausgehärtet und ist somit nicht verarbeitbar.

## Patentansprüche

1. Kationisch härtbare, bei Raumtemperatur flüssige Masse mit
a) mindestens einer kationisch polymerisierbaren Komponente (A), wobei die kationisch polymerisierbare Komponente (A) mindestens einen Glycidylether (A1) in einem Anteil von 60 bis 100 Gew.-% umfasst, bezogen auf den Anteil der Komponente (A);
b) mindestens einem thermisch latenten Säurebildner (B1) auf Basis eines aromatischen Sulfoniumsalzes; und
c) mindestens einem Stabilisator (C);
wobei der mindestens eine thermisch latente Säurebildner (B1) als Feststoff in der Masse dispergiert ist und eine Partikelgrößenverteilung mit einem Partikeldurchmesser d95 von höchstens 125 µm aufweist, wobei sich die Partikelgrößenverteilung auf den volumetrischen Teilchendurchmesser bezieht und durch das in der Beschreibung angegebene Verfahrens bestimmt wird.

2. Masse nach Anspruch 1, **dadurch gekennzeichnet, dass** die kationisch polymerisierbare Komponente (A) in einem Anteil von 5 - 99 Gew.-% vorliegt und mindestens einen mindestens difunktionellen Glycidylether (A1) enthält.

3. Masse nach Anspruch 1 oder 2, **dadurch gekennzeichnet, dass** die kationisch polymerisierbare Komponente (A) zusätzlich zu dem Glycidylether (A1) eine weitere kationisch polymerisierbare Komponente enthält, die ausgewählt ist aus der Gruppe der Vinyl- und/oder Allylether (A2), monofunktionellen Epoxide (A3), Epoxy-Acrylat-Hybridmonomere (A4), cycloaliphatischen Epoxide (A5), Oxetane (A6) und Kombinationen davon, wahlweise zusammen mit einem Polyol (A7) als Kettenüberträger.

4. Masse nach einem der vorhergehenden Ansprüche, **dadurch gekennzeichnet, dass** die kationisch polymerisierbare Komponente (A) in einem Anteil von 5 - 99 Gew.-% vorliegt, bezogen auf das Gesamtgewicht der Masse, wobei das cycloaliphatische Epoxid (A5) in einem Anteil von höchstens 30 Gew.- % und das Oxetan (A6) in einem Anteil von höchstens 15 Gew.-% vorliegen, und wobei die Komponenten A5, A6 und A7 in der Summe einen Anteil von 40 Gew.- % nicht übersteigen, jeweils bezogen auf den Gesamtgehalt der Komponente (A).

5. Masse nach einem der vorhergehenden Ansprüche, **dadurch gekennzeichnet, dass** die Masse frei von cycloaliphatischen Epoxiden ist.

6. Masse nach einem der vorhergehenden Ansprüche, **dadurch gekennzeichnet, dass** der thermisch latente Säurebildner (B1) eine Partikelgrößenverteilung mit einem Partikeldurchmesser d95 von höchstens 75 µm aufweist.

7. Masse nach einem der vorhergehenden Ansprüche, **dadurch gekennzeichnet, dass** die Masse eine oder mehrere radikalisch polymerisierbare Verbindungen (D) auf Basis von (Meth)acrylaten und einen Initiator (E) für die radikalische Polymerisation enthält.

8. Masse nach einem der vorhergehenden Ansprüche, **dadurch gekennzeichnet, dass** die Masse wenigstens eines der folgenden Merkmale erfüllt:
a) eine Aushärtezeit von 10 min bis 120 min bei einer Temperatur von 60 °C bis 100 °C;
b) eine Verarbeitungszeit von mindestens 72 h bei Raumtemperatur;
c) eine Druckscherfestigkeit der ausgehärteten Masse von 5 MPa oder mehr.

9. Masse nach einem der vorhergehenden Ansprüche, **dadurch gekennzeichnet, dass** die Masse die folgenden Komponenten umfasst oder daraus besteht, jeweils bezogen auf das Gesamtgewicht der Masse:
A) mindestens eine kationisch polymerisierbare Komponente (A) in einem Anteil von 5 bis 99 Gew.-%, wobei die kationisch polymerisierbare Komponente (A) mindestens einen difunktionellen Glycidylether (A1) in einem Anteil von mindestens 60 % enthält, bezogen auf das Gewicht der kationisch polymerisierbaren Komponente, und wahlweise weitere kationisch polymerisierbare Verbindungen aus der Gruppe der Vinyl- und/oder Allylether (A2), monofunktionellen Epoxide (A3), Hybridmonomere (A4), cycloaliphatischen Epoxide (A5), Oxetane (A6) und Alkohole (A7) sowie Kombinationen davon;
B) mindestens einem thermisch latenten Säurebildner (B1) auf Basis eines aromatischen Sulfoniumsalzes in einem Anteil von 0,01 bis 5 Gew.-%;
C) mindestens einen Stabilisator (C) in einem Anteil von 0,01 bis 5 Gew.-%;
D) eine strahlungsinduziert radikalisch polymerisierbare Verbindung in einem Anteil von 0 bis 50 Gew.-%,
E) einen Initiator für die radikalische Polymerisation in einem Anteil von 0 bis 5 Gew.-%, vorzugsweise 0,1 bis 3 Gew.-%.
F) weitere Zusatzstoffe in einem Anteil von 0 bis 85 Gew.-%.

10. Verwendung der Masse nach einem der vorhergehenden Ansprüche zum Abdichten, Verkleben, Vergießen oder Beschichten von Substraten, insbesondere von Substraten aus der Gruppe der elektronischen und optoelektronischen Bauteile.

## Claims

1. A cationically curable composition which is liquid at room temperature, comprising
a) at least one cationically polymerizable component (A), the cationically polymerizable component (A) comprising at least one glycidyl ether (A1) in a proportion of from 60 to 100 wt.%, based on the proportion of component (A);
b) at least one thermally latent acid generator (B1) based on an aromatic sulfonium salt; and
c) at least one stabilizer (C);
wherein the at least one thermally latent acid generator (B1) is dispersed in the composition as a solid and has a particle size distribution with a particle diameter d95 of at most 125 µm, wherein the particle size distribution relates to the volumetric particle diameter and is determined by the method specified in the description.

2. The composition according to claim 1, **characterized in that** the cationically polymerizable component (A) is present in a proportion of 5 - 99 wt.% and contains at least one at least bifunctional glycidyl ether (A1).

3. The composition according to claim 1 or 2, **characterized in that** in addition to the glycidyl ether (A1), the cationically polymerizable component (A) contains a further cationically polymerizable component which is selected from the group of vinyl and/or allyl ethers (A2), monofunctional epoxides (A3), epoxyacrylate hybrid monomers (A4), cycloaliphatic epoxides (A5), oxetanes (A6), and combinations thereof, optionally together with a polyol (A7) as a chain transfer agent.

4. The composition according to any one of the preceding claims, **characterized in that** the cationically polymerizable component (A) is present in a proportion of 5 - 99 wt.%, based on the total weight of the composition, wherein the cycloaliphatic epoxide (A5) is present in a proportion of at most 30 wt.% and the oxetane (A6) is present in a proportion of at most 15 wt.%, and wherein the components A5, A6, and A7 in total do not exceed a proportion of 40 wt.%, each based on the total content of component (A).

5. The composition according to any one of the preceding claims, **characterized in that** the composition is free of cycloaliphatic epoxides.

6. The composition according to any one of the preceding claims, **characterized in that** the thermally latent acid generator (B1) has a particle size distribution with a particle diameter d95 of at most 75 µm.

7. The composition according to any one of the preceding claims, **characterized in that** the composition contains one or more radically polymerizable compounds (D) based on (meth)acrylates and an initiator (E) for radical polymerization.

8. The composition according to any one of the preceding claims, **characterized in that** the composition satisfies at least one of the following features:
a) a curing time of 10 min to 120 min at a temperature of 60 °C to 100 °C;
b) a processing time of at least 72 h at room temperature;
c) a compression shear strength of the cured composition of 5 MPa or more.

9. The composition according to any one of the preceding claims, **characterized in that** the composition comprises or consists of the following components, each based on the total weight of the composition:
A) at least one cationically polymerizable component (A) in a proportion of 5 to 99 wt.%, wherein the cationically polymerizable component (A) contains at least one bifunctional glycidyl ether (A1) in a proportion of at least 60 %, based on the weight of the cationically polymerizable component, and optionally further cationically polymerizable compounds from the group of vinyl and/or allyl ethers (A2), monofunctional epoxides (A3), hybrid monomers (A4), cycloaliphatic epoxides (A5), oxetanes (A6), and alcohols (A7), and combinations thereof;
B) at least one thermally latent acid generator (B1) based on an aromatic sulfonium salt in a proportion of from 0.01 to 5 wt.%;
C) at least one stabilizer (C) in a proportion of from 0.01 to 5 wt.%;
D) a compound that is radically polymerizable induced by radiation in a proportion of from 0 to 50 wt.%;
E) an initiator for the radical polymerization in a proportion of from 0 to 5 wt.%, preferably 0.1 to 3 wt.%;
F) further additives in a proportion of from 0 to 85 wt.%.

10. A use of the composition according to any one of the preceding claims for sealing, bonding, casting or coating of substrates, in particular substrates from the group of electronic and optoelectronic component parts.

## Revendications

1. Composition liquide à température ambiante durcissable par voie cationique, comprenant
a) au moins un composant polymérisable par voie cationique (A), le composant polymérisable par voie cationique (A) comprenant au moins un éther glycidylique (A1) dans une proportion de 60 à 100 % en poids par rapport à la proportion du composant (A),
b) au moins un agent acidifiant thermiquement latent (B1) à base d'un sel de sulfonium aromatique, et
c) au moins un stabilisateur (C),
ledit au moins un agent acidifiant thermiquement latent (B1) étant dispersé sous forme de solide dans la composition et présentant une distribution granulométrique avec un diamètre de particules d95 de 125 µm au maximum, la distribution granulométrique se rapportant au diamètre volumétrique des particules et étant déterminée par le procédé indiqué dans la description.

2. Composition selon la revendication 1, **caractérisée en ce que** le composant polymérisable par voie cationique (A) est présent dans une proportion de 5 à 99 % en poids et contient au moins un éther glycidylique (A1) au moins difonctionnel.

3. Composition selon la revendication 1 ou 2, **caractérisée en ce que** le composant polymérisable par voie cationique (A) contient, en plus de l'éther glycidylique (A1), un autre composant polymérisable par voie cationique choisi dans le groupe des éthers vinyliques et/ou allyliques (A2), des époxydes monofonctionnels (A3), des monomères hybrides époxy-acrylate (A4), des époxydes cycloaliphatiques (A5), des oxétanes (A6) et de leurs combinaisons, sélectivement en association avec un polyol (A7) en tant qu'agent de transfert de chaîne.

4. Composition selon l'une des revendications précédentes, **caractérisée en ce que** le composant polymérisable par voie cationique (A) est présent dans une proportion de 5 à 99 % en poids par rapport au poids total de la composition, l'époxyde cycloaliphatique (A5) étant présent dans une proportion maximale de 30 % en poids et l'oxétane (A6) dans une proportion maximale de 15 % en poids, et les composants A5, A6 et A7 ne dépassant pas au total une proportion de 40 % en poids respectivement par rapport à la teneur totale du composant (A).

5. Composition selon l'une des revendications précédentes, **caractérisée en ce que** la composition est exempte d'époxydes cycloaliphatiques.

6. Composition selon l'une des revendications précédentes, **caractérisée en ce que** l'agent acidifiant thermiquement latent (B1) présente une distribution granulométrique avec un diamètre de particules d95 de 75 µm au maximum.

7. Composition selon l'une des revendications précédentes, **caractérisée en ce que** la composition contient un ou plusieurs composés polymérisables par voie radicalaire (D) à base de (méth)acrylates et un initiateur (E) pour la polymérisation radicalaire.

8. Composition selon l'une des revendications précédentes, **caractérisée en ce que** la composition remplit au moins l'une des caractéristiques suivantes :
a) un temps de durcissement de 10 min à 120 min à une température de 60°C à 100°C,
b) un temps de traitement d'au moins 72 h à température ambiante,
c) une résistance au cisaillement sous compression de la composition durcie de 5 MPa ou plus.

9. Composition selon l'une des revendications précédentes, **caractérisée en ce que** la composition comprend ou est constituée des composants suivants, chacun par rapport au poids total de la composition :
A) au moins un composant polymérisable par voie cationique (A) dans une proportion de 5 à 99 % en poids, le composant polymérisable par voie cationique (A) contenant au moins un éther glycidylique difonctionnel (A1) dans une proportion d'au moins 60 % par rapport au poids du composant polymérisable par voie cationique, et sélectivement d'autres composés polymérisables par voie cationique choisis dans le groupe des éthers vinyliques et/ou allyliques (A2), des époxydes monofonctionnels (A3), des monomères hybrides (A4), des époxydes cycloaliphatiques (A5), des oxétanes (A6) et des alcools (A7) ainsi que de leurs combinaisons,
B) au moins un agent acidifiant thermiquement latent (B1) à base d'un sel de sulfonium aromatique dans une proportion de 0,01 à 5 % en poids,
C) au moins un stabilisateur (C) dans une proportion de 0,01 à 5 % en poids,
D) un composé polymérisable par voie radicalaire induit par rayonnement dans une proportion de 0 à 50 % en poids,
E) un initiateur pour la polymérisation radicalaire dans une proportion de 0 à 5 % en poids, de préférence de 0,1 à 3 % en poids,
F) d'autres additifs dans une proportion de 0 à 85 % en poids.

10. Utilisation de la composition selon l'une des revendications précédentes pour l'étanchement, le collage, le coulage ou le revêtement de substrats, en particulier de substrats du groupe des composants électroniques et optoélectroniques.
